# EUROPEAN PATENT APPLICATION

(11) **EP 4 610 334 A1**
(43) Date of publication of application: **03.09.2025**
(21) Application number: 23883106.9
(22) Date of filing: 25.10.2023
(51) Int. Cl.: C10G 1/08, C10G 1/10, C01B 32/33, B29B 17/04, B01J 29/06, B01J 35/60, B01J 35/00

(54) **METHOD FOR CATALYTIC CRACKING OF PVC WASTE**

(30) Priority: 26.10.2022 KR 20220139525
(71) Applicant: LG Chem, Ltd., Yeongdeungpo-gu Seoul 07336 (KR)
(72) Inventor: AHN, Seong Yong, Daejeon 34122 (KR); KIM, Kyoungsoo, Jeonju-si Jeollabuk-do 54860 (KR); KANG, Sang Wook, Jeonju-si Jeollabuk-do 55089 (KR)
(74) Representative: Goddar, Heinz J.
(86) International application number: PCT/KR2023/016686
(87) International publication number: WO 2024/091001

(57) **Abstract**

The present invention relates to a method for catalytic cracking of PVC waste using a zeolite catalyst. When using the catalyst cracking method of the present invention, the cracking reaction may be performed so that the selectivity for useful components is high.

## Description

### [Technical Field]

### CROSS-REFERENCE TO RELATED APPLICATION

This application claims the benefit of priority to Korean Patent Application No. 10-2022-0139525 filed on October 26, 2022, the disclosure of which is incorporated herein by reference in its entirety.

### TECHNICAL FIELD

The present invention relates to a method for catalytic cracking of PVC waste, which can obtain gas components, which are useful resources, with high selectivity by catalytic cracking of PVC waste, while lowering the content of chlorine, a harmful component, in the product.

### [Background Art]

Polyvinyl chloride resin is one of the five major general-purpose resins, and as of 2018, its global production amounted to more than 40 million tons. Most of the used polyvinyl chloride resin is disposed of through landfilling and incineration. However, in the case of landfilling, there is a problem that the chlorine component in the polyvinyl chloride resin is converted into a highly toxic substance in the ground, and in the case of incineration, there is a problem that harmful substances such as dioxin are generated during the incineration process. Furthermore, in the case of landfilling and incineration, the used polyvinyl chloride resin cannot be reused. Therefore, recently, with great interest in sustainability, there has been great interest in methods of recycling the polyvinyl chloride instead of landfilling and incineration.

A representative recycling method of polyvinyl chloride resin is a mechanical recycling method. In the mechanical recycling method, waste products using polyvinyl chloride resin are crushed, cleaned, dried, and cast to be used as raw materials for new plastic products. The mechanical recycling method has the advantage of a simple process and being suitable for processing large amounts of waste products, but it has the disadvantage that it is difficult to obtain recycled products with uniform properties as the properties continuously change during the recycling process. Specifically, since polyvinyl chloride resin has poor thermal and optical stability, it is molded by mixing additives such as stabilizers in the resin. However, these additive components are denatured in the mechanical recycling process, making it difficult to maintain constant properties of polyvinyl chloride resin during the process of mechanical recycling.

To solve the shortcomings of this mechanical recycling method, a chemical recycling method is used. In the chemical recycling method, various low molecular components can be recovered from the polyvinyl chloride by breaking the polymer chain thereof, wherein the low molecular components can be used again as raw materials in various fields through a purification process. The chemical recycling method chemically treats the polyvinyl chloride resin, so it can be easily applied even when the waste is not classified or is contaminated, and has the advantage of not being limited by the presence of various types of additives in the resin.

A representative chemical recycling method of polyvinyl chloride resin is a pyrolysis process. By pyrolyzing the polyvinyl chloride resin under high temperature and oxygen-free conditions, components such as hydrocarbons, hydrogen chloride, and char can be obtained. However, in this pyrolysis process, the types or contents of components in the hydrocarbon obtained may vary depending on the catalyst or pyrolysis conditions used. If the selectivity of C2 or C3 gas compounds or C5 to C9 gasoline oils, which are useful resources among the obtained hydrocarbons, can be increased, there is an advantage that the economics of the chemical recycling process can be further improved. Therefore, in applying the chemical recycling process to the recycling process of the polyvinyl chloride resin, research is needed on methods to further increase the selectivity of the above useful components.

### [Disclosure]

### [Technical Problem]

The present invention is intended to solve the problems of the prior art described above, and to provide a method of recycling PVC waste, which can increase the selectivity of useful components by cracking the PVC waste in the presence of a zeolite catalyst with an average crystal size of 5 to 30 nm.

In addition, the present invention is intended to provide a method for producing activated carbon with a high specific surface area and pore volume by activating the solid residue formed according to the PVC catalytic cracking process.

### [Technical Solution]

In order to solve the above problems, the present invention provides a method for catalytic cracking of PVC waste, and a method for producing activated carbon from the solid residue obtained as a result of the cracking.
Specifically, (1) the present invention provides a method for catalytic cracking of PVC waste, the method including a step (S1) of pyrolyzing PVC waste in the presence of a zeolite catalyst to obtain a hydrocarbon mixture, wherein the zeolite catalyst has an average crystal size of 5 to 30 nm.
(2) The present invention provides the method for catalytic cracking of PVC waste according to (1) above, wherein the zeolite catalyst supports at least one metal selected from the group consisting of Ni, Cu, Fe, and Mn.
(3) The present invention provides the method for catalytic cracking of PVC waste according to (1) or (2) above, wherein the zeolite catalyst has mesopores with a diameter of 5 to 30 nm.
(4) The present invention provides the method for catalytic cracking of PVC waste according to any one of (1) to (3) above, wherein the zeolite catalyst has a BET specific surface area of 300 to 400 m²/g.
(5) The present invention provides the method for catalytic cracking of PVC waste according to any one of (1) to (4) above, wherein the zeolite catalyst has a pore volume of 0.25 to 0.35 cm³/g.
(6) The present invention provides the method for catalytic cracking of PVC waste according to any one of (1) to (5) above, wherein the pyrolysis is performed at 400 to 500°C.
(7) The present invention provides the method for catalytic cracking of PVC waste according to any one of (1) to (6) above, wherein the pyrolysis is performed for 1 to 6 hours.
(8) The present invention provides the method for catalytic cracking of PVC waste according to any one of (1) to (7) above, wherein the PVC content of the PVC waste is 20% by weight or more.
(9) The present invention provides the method for catalytic cracking of PVC waste according to any one of (1) to (8) above, wherein the ratio of olefin - based products in the hydrocarbon mixture obtained in the step (S1) is 20 mol% or more.
(10) The present invention provides the method for catalytic cracking of PVC waste according to any one of (1) to (9) above, wherein the hydrocarbon mixture obtained in step (S1) includes a gas product, a liquid product, and a solid residue.
(11) The present invention provides the method for catalytic cracking of PVC waste according to any one of (1) to (10) above, wherein the Cl content in the liquid product is 1% by weight or less.
(12) The present invention provides a method for producing activated carbon, the method including the steps of: pyrolyzing PVC waste in the presence of a zeolite catalyst to obtain a hydrocarbon mixture (S1); and activating a solid residue in the hydrocarbon mixture (S2), wherein the zeolite catalyst has an average crystal size of 5 to 30 nm.
(13) The present invention provides the method for producing activated carbon according to (12) above, wherein the activation is performed using H₂O or KOH.
(14) The present invention provides the method for producing activated carbon according to (12) or (13) above, wherein the activated carbon has a BET specific surface area of 250 m²/g or more.
(15) The present invention provides the method for producing activated carbon according to any one of (12) to (14) above, wherein the activated carbon has a pore volume of 0.50 to 1 cm³/g.

### [Advantageous Effects]

When using the catalyst cracking method of PVC waste according to the present invention, it is possible to recover C2 or C3 gas compounds or C5 to C9 gasoline oils, which are useful components, with high selectivity.

In addition, when activated carbon is produced from solid residues in the hydrocarbon mixture obtained using the catalytic cracking method of PVC waste according to the present invention, activated carbon with a large specific surface area and pore volume can be obtained.

### [Best Modes of the Invention]

Hereinafter, the present invention will be described in more detail.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

### Catalytic cracking method of PVC waste

As a result of research on a method for chemical recycling of PVC waste, the inventors of the present invention have confirmed that when the PVC waste is pyrolyzed using a zeolite catalyst with an average crystal size of 5 to 30 nm, the selectivity of C2 or C3 gas compounds or C5 to C9 gasoline oils, which are useful components in the finally obtained hydrocarbon mixture, can be increased, thereby completing the present invention.

Accordingly, the present invention provides a method for catalytic cracking of PVC waste, the method including a step (S1) of pyrolyzing PVC waste in the presence of a zeolite catalyst to obtain a hydrocarbon mixture, wherein the zeolite catalyst has an average crystal size of 5 to 30 nm.

Hereinafter, the catalytic cracking method of PVC waste provided by the present invention will be described in more detail.

### PVC waste

The catalytic cracking of the present invention is for PVC waste, and an object of the present invention is to recover useful components from the PVC waste and recycle them.

The PVC waste subject to the catalytic cracking in the present invention is not particularly limited as long as it contains PVC products, and may be, for example, PVC molded products such as waste tarpaulins or waste electric wires. Meanwhile, in the present invention, the PVC content of the PVC waste may be 20% by weight or more, and more preferably 30 to 40% by weight. If the catalytic cracking is performed on the PVC waste containing a PVC content less than the above-mentioned amount, the selectivity of useful components may not be sufficiently high due to the presence of components other than PVC in the waste. On the other hand, when the PVC content in the PVC waste is too high, the chlorine (Cl) content increases accordingly, and the high chlorine content may reduce an activity of the catalyst, preventing the cracking reaction from proceeding smoothly.

Meanwhile, in the present invention, a step (S0) of pretreating the PVC waste before pyrolyzing the PVC waste may be further included. The pretreatment may be to remove impurities present in the PVC waste and to increase the surface area by mechanically pulverizing the PVC waste. Specifically, the pretreatment may be a water washing and crushing process.

When the above pretreatment is performed, the content of impurities in the waste before pyrolysis can be sufficiently lowered to minimize side reactions caused by the presence of impurities, and the surface area of the waste can be increased to maximize the efficiency of the pyrolysis process.

### Zeolite catalyst

In the present invention, the pyrolysis of the waste PVC is carried out in the presence of a zeolite catalyst. The zeolite catalyst is widely used industrially in cracking reactions. In particular, in the present invention, zeolite catalysts with an average crystal size of 5 to 30 nm, preferably 10 to 20 nm, are used. When the pyrolysis reaction is performed using a catalyst having an average crystal size smaller than the above-described range, the intensity of the catalyst acid site is weakened, which causes the problem of lowering the efficiency of the cracking reaction. When a catalyst having an average crystal size larger than the above-mentioned range is used, a problem occurs in which the selectivity of olefin-based products, which are useful components, is lowered. It may be particularly preferable that the average crystal size is 10 to 20 nm. The crystal size may be measured by directly observing the catalyst crystal through a transmission electron microscope (TEM).

Meanwhile, the zeolite catalyst may support one or more metals selected from the group consisting of Ni, Cu, Fe, and Mn, and particularly preferably Ni. Even if zeolite catalysts that do not support the metal components listed above are used, a sufficient cracking reaction is performed. However, when the catalyst carrying the above metal components is used, there is a technical advantage in that the chlorine content in the final product can be further reduced. Since the chlorine component can act as an impurity in the hydrocarbon mixture and can also act as a harmful substance, lowering the chlorine content may be more desirable in terms of efficiency and economics of the subsequent process. Meanwhile, when the above metal is supported on the zeolite catalyst, the content of the metal in the catalyst may be 1 to 10% by weight, and particularly preferably 3 to 7% by weight. When the content of the metal in the catalyst is too small, the effect of supporting the metal is insignificant, and when the content of the metal in the catalyst is more than the above-mentioned range, it is not easy to support the metal itself.

In the catalytic cracking method of PVC waste according to the present invention, the zeolite catalyst may have mesopores with a diameter of 5 to 30 nm, preferably 10 to 20 nm, due to its nanocrystalline property. In addition, the zeolite catalyst may have a BET specific surface area of 300 to 400 m²/g, preferably 320 to 380 m²/g. Additionally, the pore volume of the zeolite catalyst may be 0.25 to 0.35 cm³/g, preferably 0.26 to 0.33 cm³/g. When the specific surface area and pore characteristics of the zeolite satisfy the above-mentioned conditions, efficient thermal decomposition and cracking can be performed by securing a sufficiently large specific surface area. Meanwhile, in the present invention, the pore diameter and volume can be measured using Micromeritics' ASAP 2020 equipment. More specifically, after pretreating the catalyst sample at 300°C and vacuum for 3 hours, the argon gas isothermal adsorption curve is measured at 186°C using the above equipment, and the pore diameter and volume can be calculated through the isothermal adsorption curve. The BET specific surface area can be calculated using the adsorption amount in the P/P0=0.05 to 0.2 region of the isothermal adsorption curve through the BET method, and the pore volume can be calculated from the adsorption amount at P/P0=0.95.

### Pyrolysis

According to the present invention, a hydrocarbon mixture, more specifically a useful components, can be obtained by pyrolyzing the above-described PVC waste under the above-described zeolite catalyst.

In the present invention, in order to perform the pyrolysis, the PVC waste should be heated to a certain temperature or higher. More specifically, the pyrolysis may be performed at 300 to 500°C, preferably 350 to 450°C. If the pyrolysis temperature is lower than the above-mentioned range, the polymer chains of PVC may not be sufficiently broken, and if the pyrolysis temperature is significantly higher than the above-mentioned range, there may be a problem that the formed useful components, specifically C5 to C9 gasoline oils are additionally cracked.

Additionally, the pyrolysis may be performed for 1 to 6 hours, preferably 1 to 4 hours. If the pyrolysis time is too short, the PVC may not be sufficiently pyrolyzed. If the pyrolysis time is too long, excessive energy may be consumed even though there is no actual pyrolysis reaction, which may reduce the economic feasibility of the pyrolysis process.

Meanwhile, chlorine in the PVC chain may be decomposed into hydrogen chloride during the pyrolysis process, and thus, in order to recover the hydrogen chloride generated during the pyrolysis process, the reactor in which the pyrolysis is performed may be equipped with a separate gas collection means.

### Hydrocarbon mixture

Through the pyrolysis process described above, a hydrocarbon mixture containing useful components can be formed from PVC waste. The hydrocarbon mixture may include gas products, liquid products, and solid residues. The gas mixture may include C2 or C3 gas compounds, and the liquid product may include C5 to C9 gasoline oils. More specifically, the liquid product may include oily components such as gasoline, kerosene, diesel, and wax.

Meanwhile, the Cl content in the liquid product may be 1% by weight or less, and preferably 0.5% by weight or less. When using the zeolite catalyst described above, the chlorine content in the final liquid product can be kept low as above, and especially when using the catalyst in which the metal is supported on the zeolite, the chlorine content in the liquid product can be minimized.

In addition, the proportion of olefin-based products in the hydrocarbon mixture obtained through the PVC waste catalytic cracking method of the present invention may be 20 mol% or more. When each component of the obtained hydrocarbon is classified into paraffinic, olefinic, naphthenic, and aromatic, as described above, the catalytic cracking method of the present invention may exhibit a high selectivity for the olefinic and a relatively low selectivity for the aromatic and naphthenic. This is inferred to be because in the presence of the zeolite catalyst with an average crystal size of 5 to 30 nm used in the present invention, the products after cracking are easily diffused, resulting in less naphthenic and aromatic products having a ring structure. In particular, the PVC waste catalytic cracking method of the present invention can exhibit a high selectivity for ethylene and propylene, and the ratio of the two components in the product may be at least 20 mol%.

### Manufacturing method of activated carbon

The present invention provides a method for producing activated carbon in addition to the catalytic cracking method for the waste PVC described above. More specifically, the activated carbon provided by the present invention can be obtained by recovering the liquid product and gas product as useful components from the hydrocarbon mixture obtained as a result of catalytic cracking of the waste PVC described above, and activating the remaining solid residue. The solid residue is obtained in the form of char.

More specifically, the present invention provides a method for producing activated carbon, the method including the steps of: pyrolyzing PVC waste in the presence of a zeolite catalyst to obtain a hydrocarbon mixture (S1); and activating a solid residue in the hydrocarbon mixture (S2), wherein the zeolite catalyst has an average crystal size of 5 to 30 nm.

The step (S1) and the zeolite catalyst are the same as those described above, so their descriptions are omitted. Meanwhile, the activation is a process of developing micropores in the solid residue, and may be performed using H₂O or KOH as an activator. Through the activation process, a micropore structure of the activated carbon is formed, and the specific surface area and pore volume of the activated carbon can be greatly increased.

More specifically, the step (S2) may be performed under an atmosphere in which the moisture content is 1% by weight or less, and more specifically, under an inert atmosphere. The inert atmosphere may mean a nitrogen atmosphere or a helium atmosphere. If the step (S2) is performed in an atmosphere having a moisture content above the above-mentioned range, the moisture in the atmosphere reacts with the char preferentially over carbon dioxide, and inferior activated carbon, which is produced when treated with steam, may be produced.

The BET specific surface area of the activated carbon obtained through the activated carbon production method of the present invention may be 250 m²/g or more, particularly preferably 280 to 1200 m²/g. Additionally, the pore volume of the activated carbon may be 0.50 to 1 cm³/g, particularly preferably 0.50 to 0.70 cm³/g. The above specific surface area and pore volume ranges of the activated carbon are significantly higher than those of the existing solid residue before activation. Accordingly, when using the activated carbon production method of the present invention, the liquid and gas products can be recovered as useful components, and further, the solid residues corresponding to by-products can also be advantageously manufactured into activated carbon with a high specific surface area.

The activated carbon production method of the present invention may further include a washing and drying step following the pyrolysis step and activation step described above. More specifically, the activated carbon production method of the present invention includes a step of washing and drying the activated solid residue (S3).

The solid residue passing through the previous steps is in the form of activated carbon, and some foreign substances may exist on the surface thereof. Therefore, the activated solid residue may be washed with water and dried to remove foreign substances from the surface. The washing in this step may be performed with distilled water, and the drying may be performed at a sufficiently low temperature such that the structure of the activated carbon does not collapse, for example, at a temperature of 40 to 60°C.

Hereinafter, the present invention will be described in more detail by way of examples and experimental examples to specifically illustrate the present invention, but the present invention is not limited to these examples and experimental examples. However, the examples according to the present invention may be modified in various different forms, and the scope of the present invention should not be construed as being limited to the examples described in detail below. The examples of the present invention are provided to explain the present invention more completely to those skilled in the art.

### Catalyst Preparation Example 1

[C₆H₁₃-N⁺(CH₃)₂-C₆H₁₂-N⁺(CH₃)₂-C₆H_{13]}Br₂⁻, an organic ammonium molecule, was used as a zeolite structure directing agent (SDA). First, the SDA organic ammonium and NaOH were dissolved in distilled water, and then the solution was stirred at room temperature for 1 hour. Thereafter, an aqueous sodium silicate solution was added thereto and stirred at room temperature for another 1 hour, then 47% by weight of sulfuric acid was added and stirred at 60°C for 12 hours. The molar ratio of the components of the solution finally prepared by adding the sulfuric acid is as follows:
100 SiO₂ / 1.25 Al₂O₃ / 30 NaO / 10 SDA / 24 H₂SO₄ / 4000 H₂O

The prepared solution was placed in a Teflon container, and the container was placed in a stainless-steel autoclave and rotated at 130°C for 5 days. Afterwards, the formed solid precipitate was separated from the solution by filtration, dried in an oven at 100°C for one day, and then calcined under the condition of flowing air at 550°C to finally obtain a catalyst.

### Catalyst Preparation Example 2

1 g of the catalyst prepared in Catalyst Preparation Example 1 was added to 250 ml of 1M Ni(NO₃)₂ aqueous solution and stirred at room temperature for 1 hour. Afterwards, the catalyst was separated from the solution by filtration, dried in an oven at 100°C for one day, and then calcined under the condition of flowing air at 450°C to obtain a catalyst carrying Ni.

### Catalyst Preparation Example 3

A catalyst was prepared by calcining Zeolyst's MFI zeolite (product name: CBV 5524G) under the condition of flowing air at 450°C.

### Catalyst Preparation Example 4

A catalyst was prepared by calcining Tosoh Corporation's beta zeolite (product name: HSZ-931HOA) under the condition of flowing air at 450°C.

The BET specific surface area, pore volume, mesopore diameter, and average crystal size of the catalysts prepared in Catalyst Preparation Examples 1 to 4 are summarized in Table 1 below.

**[Table 1]**

| | BET specific surface area (m²/g) | Pore volume (cm³/g) | Mesopore diameter (nm) | Mesopore average diameter (nm) | Average crystal size (nm) |
|---|---|---|---|---|---|
| Catalyst Preparation Example 1 | 370 | 0.31 | 5-30 | 8.9 | 15 |
| Catalyst Preparation Example 2 | 329 | 0.26 | 5-30 | 8.9 | 15 |
| Catalyst Preparation Example 3 | 355 | 0.22 | ND | ND | ~300 |
| Catalyst Preparation Example 4 | 425 | 0.29 | ND | ND | ~200 |

In the above catalyst preparation examples, catalyst preparation examples 3 and 4 did not have mesopores due to the lack of nanocrystallinity of the catalyst, and thus the mesopore diameter could not be measured.

### Example 1-1

10 g of waste tarpaulin was used as PVC waste. The waste tarpaulin was washed with water and pulverized and put into a pyrolysis reactor, and 1 g of the catalyst prepared in Catalyst Preparation Example 1 was also added to the pyrolysis reactor. Then, the reactor was sealed and heated to 450°C. The pyrolysis reaction was performed for 2 hours from the moment the temperature inside the reactor reached 450°C, and as a result, a hydrocarbon mixture containing gas products, liquid products, and solid residues was obtained.

### Example 1-2

The same procedure as in Example 1-1 was performed, except that 1 g of the catalyst prepared in Catalyst Preparation Example 2 was used as the catalyst. As a result, a hydrocarbon mixture containing gas products, liquid products, and solid residues was obtained.

### Comparative Example 1-1

The same procedure as in Example 1-1 was performed, except that no catalyst was used. As a result, a hydrocarbon mixture containing gas products, liquid products, and solid residues was obtained.

### Comparative Example 1-2

The same procedure as in Example 1-1 was performed, except that 1 g of the catalyst prepared in Catalyst Preparation Example 3 was used as the catalyst. As a result, a hydrocarbon mixture containing gas products, liquid products, and solid residues was obtained.

### Comparative Example 1-3

The same procedure as in Example 1-1 was performed, except that 1 g of the catalyst prepared in Catalyst Preparation Example 4 was used as the catalyst. As a result, a hydrocarbon mixture containing gas products, liquid products, and solid residues was obtained.

### Example 2-1

### 10 g of waste wire was used as PVC waste. The waste wire was washed with water and pulverized and put into a pyrolysis reactor, and 1 g of the catalyst prepared in Catalyst Preparation Example 1 was also added to the pyrolysis reactor. Then, the reactor was sealed and heated to 400°C. The pyrolysis reaction was performed for 2 hours from the moment the temperature inside the reactor reached 400°C, and as a result, a hydrocarbon mixture containing gas products, liquid products, and solid residues was obtained.

### Example 2-2

The same procedure as in Example 2-1 was performed, except that 1 g of the catalyst prepared in Catalyst Preparation Example 2 was used as the catalyst. As a result, a hydrocarbon mixture containing gas products, liquid products, and solid residues was obtained.

### Comparative Example 2-1

The same procedure as in Example 2-1 was performed, except that no catalyst was used. As a result, a hydrocarbon mixture containing gas products, liquid products, and solid residues was obtained.

### Comparative Example 2-2

The same procedure as in Example 2-1 was performed, except that 1 g of the catalyst prepared in Catalyst Preparation Example 3 was used as the catalyst. As a result, a hydrocarbon mixture containing gas products, liquid products, and solid residues was obtained.

### Comparative Example 2-3

The same procedure as in Example 2-1 was performed, except that 1 g of the catalyst prepared in Catalyst Preparation Example 4 was used as the catalyst. As a result, a hydrocarbon mixture containing gas products, liquid products, and solid residues was obtained.

The catalyst types, PVC waste, and pyrolysis temperatures used in Examples 1-1 to 2-2 and Comparative Examples 1-1 to 2-3 are summarized in Table 2 below.

**[Table 2]**

| | PVC waste type | Catalyst type | Reaction temperature (°C) |
|---|---|---|---|
| Example 1-1 | Waste tarpaulin | Catalyst Preparation Example 1 | 450 |
| Example 1-2 | Waste tarpaulin | Catalyst Preparation Example 2 | 450 |
| Example 2-1 | Waste wire | Catalyst Preparation Example 1 | 400 |
| Example 2-2 | Waste wire | Catalyst Preparation Example 2 | 400 |
| Comparative Example 1-1 | Waste tarpaulin | Catalyst not used | 450 |
| Comparative Example 1-2 | Waste tarpaulin | Catalyst Preparation Example 3 | 450 |
| Comparative Example 1-3 | Waste tarpaulin | Catalyst Preparation Example 4 | 450 |
| Comparative Example 2-1 | Waste wire | Catalyst not used | 400 |
| Comparative Example 2-2 | Waste wire | Catalyst Preparation Example 3 | 400 |
| Comparative Example 2-3 | Waste wire | Catalyst Preparation Example 4 | 400 |

### Example 3-1

Only the solid residue of the hydrocarbon mixture obtained in Example 1-1 was separated and then activated with H₂O. The activation was performed at a temperature of 750°C for 2 hours to finally obtain activated carbon.

### Example 3-2

Activated carbon was obtained in the same manner as in Example 3-1, except that the activation temperature was 800°C.

### Example 3-3

Activated carbon was obtained in the same manner as in Example 3-1, except that the activation temperature was 800°C and the activation time was 4 hours.

### Example 3-4

Activated carbon was obtained in the same manner as in Example 3-1, except that the activation was performed using KOH instead of H₂O and the activation temperature is 700°C.

### Example 3-5

Activated carbon was obtained in the same manner as in Example 3-1, except that the activation was performed using KOH instead of H₂O.

### Comparative Example 3

Only the solid residue of the hydrocarbon mixture obtained in Example 1-1 was separated and then heat-treated without an activation step using a separate activator, and as a result, activated carbon was obtained.

The activation conditions in Example 3-1 and Comparative Example 3 are summarized in Table 3 below.

**[Table 3]**

| | Activator type | Activation temperature (°C) | Activation time (hr) |
|---|---|---|---|
| Example 3-1 | H₂O activation | 750 | 2 |
| Example 3-2 | H₂O activation | 800 | 2 |
| Example 3-3 | H₂O activation | 800 | 4 |
| Example 3-4 | KOH activation | 700 | 2 |
| Example 3-5 | KOH activation | 750 | 2 |
| Comparative Example 3 | Not used | 750 | 2 |

### Experimental Example 1. Confirmation of the ratio of each product in the obtained hydrocarbon mixture

The mass ratios of the liquid product, gas product, and solid residue in the hydrocarbon mixtures obtained in Examples 1 to 2 and Comparative Examples 1 to 2 were confirmed. The ratio of each of the products was determined by measuring the mass of the solid residue and liquid product after acquisition, and subtracting the mass of the solid residue and liquid product from the weight of the reactants before reaction and taking the remaining weight as the weight of the gas product. The results are summarized in Table 4 below.

**[Table 4]**

| | Liquid product (% by mass) | Gas product (% by mass) | Solid residue (% by mass) |
|---|---|---|---|
| Example 1-1 | 7.5 | 73.4 | 19.1 |
| Example 1-2 | 7.8 | 72.9 | 19.3 |
| Example 2-1 | 19.4 | 63.4 | 17.2 |
| Example 2-2 | 18.0 | 64.0 | 18.0 |
| Comparative Example 1-1 | 13.6 | 64.3 | 22.1 |
| Comparative Example 1-2 | 10.9 | 68.0 | 21.1 |
| Comparative Example 1-3 | 13.0 | 64.5 | 22.5 |
| Comparative Example 2-1 | 9.8 | 64.9 | 27.3 |
| Comparative Example 2-2 | 10.9 | 63.4 | 25.7 |
| Comparative Example 2-3 | 10.1 | 63.7 | 26.2 |

As can be seen from Table 4 above, when comparing Examples 1-1 to 1-2 and Comparative Examples 1-1 to 1-3 in which the same PVC waste was cracked, a higher gas product ratio was confirmed in the Examples, and as for the solid residue, a lower solid residue ratio was confirmed in the Example. The solid residue is the least useful component among the components obtained as a result of cracking. Thus, it can be confirmed that more useful gas products and liquid products can be obtained with higher selectivity when using the examples of the present invention.

Such results are equally confirmed even when comparing Examples 2-1 to 2-2 and Comparative Examples 2-1 to 2-3. In the case of Comparative Examples 2-1 to 2-3, a higher solid residue ratio was confirmed compared to Examples 2-1 to 2-2, and in the case of Examples 2-1 to 2-2, a higher liquid product ratio was confirmed compared to Comparative Examples 2-1 to 2-3. Which of the gas products and liquid products obtained as a result of cracking will have higher selectivity may vary depending on the type of PVC waste subject to cracking. From the above, however, it was confirmed that overall, when using the cracking method of the present invention, the selectivity for the solid residues corresponding to by-products could be lowered, and the selectivity for useful components could be increased.

### Experimental Example 2. Confirmation of the product ratio of each hydrocarbon type in the obtained hydrocarbon mixture

The molar ratios of paraffinic, olefinic, naphthenic and aromatic products in the hydrocarbon mixtures obtained in Examples 1 to 2 and Comparative Examples 1 to 2 were confirmed. The molar ratio of each product above was measured using YL Instrument 6500GC gas chromatograph equipped with a conductivity detector and a flame ionization detector (manufactured by YOUNGIN SCIENTIFIC CO., LTD.). In the case of the gas products, on-line GC analysis was used in which the products were directly injected into the GC, and in the case of the liquid products, they were taken separately after the reaction time and measured by GC analysis. The results are summarized in Table 5 below.

**[Table 5]**

| | Paraffinic (%) | Olefinic (%) | Naphthenic (%) | Aromatic (%) |
|---|---|---|---|---|
| Example 1-1 | 32.5 | 28.2 | 0.5 | 38.8 |
| Example 1-2 | 30.2 | 27.6 | 0.5 | 41.7 |
| Example 2-1 | 31.2 | 29.7 | 0.4 | 39.7 |
| Example 2-2 | 32.6 | 28.2 | 0.6 | 38.6 |
| Comparative Example 1-1 | 54.2 | 10.4 | 3.9 | 31.5 |
| Comparative Example 1-2 | 28.2 | 19.1 | 0.6 | 52.1 |
| Comparative Example 1-3 | 39.2 | 18.5 | 1.4 | 40.9 |
| Comparative Example 2-1 | 43.4 | 7.9 | 9.0 | 39.6 |
| Comparative Example 2-2 | 36.7 | 18.3 | 0.7 | 44.3 |
| Comparative Example 2-3 | 38.2 | 19.2 | 1.4 | 41.2 |

As can be seen from Table 5 above, when using the cracking method according to the examples of the present invention, it was confirmed that the selectivity for the olefinic products was significantly higher than that of the comparative example, and the selectivity for the naphthenic and aromatic products was overall low. From this, it was confirmed that when using the cracking method of the present invention, the naphthenic and aromatic products with low usefulness can be obtained with low selectivity, while the olefinic products with high usefulness can be obtained with high selectivity.

### Experimental Example 3. Confirmation of the oil ratio of liquid product in the obtained hydrocarbon mixture

The liquid products in the hydrocarbon mixture obtained in the above Examples and Comparative Examples was separated separately, and then the oil ratio (molar basis) in the liquid products was checked, and the chlorine content in the liquid products was also measured. The ratio of each oil was measured through GC analysis, the same method as in Experimental Example 2, and the chlorine content was measured using an ion chromatography equipment equipped with a combustion module. The results are summarized in Table 6 below.

**[Table 6]**

| | Gasoline | Kerosene + Diesel | Wax | Chlorine content (% by mass) |
|---|---|---|---|---|
| Example 1-1 | 88.7 | 10.4 | 0.9 | 0.5 |
| Example 1-2 | 88.2 | 10.8 | 1.0 | 0.3 |
| Example 2-1 | 92.6 | 5.6 | 1.8 | 1.1 |
| Example 2-2 | 91.5 | 6.3 | 2.2 | 0.7 |
| Comparative Example 1-1 | 71.2 | 27.5 | 1.3 | 4.02 |
| Comparative Example 1-2 | 79.2 | 19.2 | 1.6 | 0.8 |
| Comparative Example 1-3 | 77.1 | 21.1 | 1.8 | 0.9 |
| Comparative Example 2-1 | 81.0 | 10.7 | 8.3 | 6.1 |
| Comparative Example 2-2 | 82.8 | 14.0 | 3.2 | 1.3 |
| Comparative Example 2-3 | 80.1 | 15.6 | 4.3 | 1.4 |

As can be seen in Table 6 above, the liquid products obtained through the cracking method of the examples of the present invention have a high proportion of gasoline with high added value of more than 88%, whereas in the case of the cracking method of the comparative examples, the gasoline proportion was lower than that of the examples. From this, it can be confirmed that when using the cracking method of the present invention, the selectivity for useful components can be increased.

In addition, the chlorine content in the liquid products obtained when using the examples of the present invention was significantly low, and thus, it can be seen that when using the cracking method of the present invention, the cost for purification of the obtained oil can also be minimized.

### Experimental Example 4. Confirmation of structural properties of the obtained activated carbon

The specific surface area and pore volume of the activated carbon obtained in Examples 3-1 to 3-5 and Comparative Example 3 were examined. The pore volume and specific surface area were measured using Micromeritics' ASAP 2020 equipment. More specifically, after pretreating the activated carbon sample at 300°C and vacuum for 3 hours, the argon gas isothermal adsorption curve is measured at 186°C using the above equipment, and the pore diameter and volume were calculated through the isothermal adsorption curve. The BET specific surface area was calculated using the adsorption amount in the P/P0=0.05 to 0.2 region of the isothermal adsorption curve through the BET method, and the pore volume was calculated from the adsorption amount at P/P0=0.95. The results are summarized in Table 7 below.

**[Table 7]**

| | BET specific surface area (m²/g) | Pore volume (cm³/g) |
|---|---|---|
| Example 3-1 | 292 | 0.60 |
| Example 3-2 | 402 | 0.57 |
| Example 3-3 | 548 | 0.59 |
| Example 3-4 | 1000 | 0.54 |
| Example 3-5 | 1180 | 0.65 |
| Comparative Example 3 | 40 | 0.05 |

As can be seen in Table 7 above, it was confirmed that when activated carbon is obtained by activating the solid residues obtained through the cracking process of the present invention, the activated carbon can have a high specific surface area and a high pore volume.

## Claims

1. A method for catalytic cracking of PVC waste, the method including a step (S1) of pyrolyzing PVC waste in the presence of a zeolite catalyst to obtain a hydrocarbon mixture,
wherein the zeolite catalyst has an average crystal size of 5 to 30 nm.

2. The method for catalytic cracking of PVC waste according to claim 1, wherein the zeolite catalyst supports at least one metal selected from the group consisting of Ni, Cu, Fe, and Mn.

3. The method for catalytic cracking of PVC waste according to claim 1, wherein the zeolite catalyst has mesopores with a diameter of 5 to 30 nm.

4. The method for catalytic cracking of PVC waste according to claim 1, wherein the zeolite catalyst has a BET specific surface area of 300 to 400 m²/g.

5. The method for catalytic cracking of PVC waste according to claim 1, wherein the zeolite catalyst has a pore volume of 0.25 to 0.35 cm³/g.

6. The method for catalytic cracking of PVC waste according to claim 1, wherein the pyrolysis is performed at 400 to 500°C.

7. The method for catalytic cracking of PVC waste according to claim 1, wherein the pyrolysis is performed for 1 to 6 hours.

8. The method for catalytic cracking of PVC waste according to claim 1, wherein the PVC content of the PVC waste is 20% by weight or more.

9. The method for catalytic cracking of PVC waste according to claim 1, wherein the ratio of olefin -based products in the hydrocarbon mixture obtained in the step (S1) is 20 mol% or more.

10. The method for catalytic cracking of PVC waste according to claim 1, wherein the hydrocarbon mixture obtained in step (S1) includes a gas product, a liquid product, and a solid residue.

11. The method for catalytic cracking of PVC waste according to claim 10, wherein the Cl content in the liquid product is 1% by weight or less.

12. A method for producing activated carbon, the method including the steps of:
pyrolyzing PVC waste in the presence of a zeolite catalyst to obtain a hydrocarbon mixture (S1); and
activating a solid residue in the hydrocarbon mixture (S2),
wherein the zeolite catalyst has an average crystal size of 5 to 30 nm.

13. The method for producing activated carbon according to claim 12, wherein the activation is performed using H²O or KOH.

14. The method for producing activated carbon according to claim 12, wherein the activated carbon has a BET specific surface area of 250 m²/g or more.

15. The method for producing activated carbon according to claim 12, wherein he activated carbon has a pore volume of 0.50 to 1 cm³/g.
